# EUROPEAN PATENT SPECIFICATION

(11) **EP 2 884 087 B1**
(45) Date of publication and mention of the grant of the patent: **28.06.2017**
(21) Application number: 13290316.2
(22) Date of filing: 16.12.2013
(51) Int. Cl.: F02M 35/10, F16L 13/02, F16L 47/02

(54) **Duct system**
Kanalsystem
Système de conduit

(43) Date of publication of application: 17.06.2015
(73) Proprietor: MANN + HUMMEL GMBH, 71636 Ludwigsburg (DE)
(72) Inventor: Bedouet, Cécile, 53810 Changé (FR); Marteau, Christophe, 53000 Laval (FR); Le Goff, Hervé, 53940 Le Genest St Isle (FR); Baert, Gautier, 53000 Laval (FR)

(56) References cited:
- EP-A1- 2 562 409
- DE-A1- 19 813 599
- GB-A- 839 743
- US-A- 5 682 924

## Description

### Technical Field

The present invention relates to a duct system, in particular of an intake system, in particular of an internal combustion engine, in particular of a motor vehicle, comprising at least two ducts of plastic, which are connected at one end each and along at least one circumferential connection area each by means of at least one material connection.

Further, the present invention relates to a method for manufacturing a duct system, in particular an inventive duct system.

### State of Technology

A charging air duct of an internal combustion engine of a motor vehicle has a blow-molded duct and an injection-molded duct. The ducts are welded at one end each along a circumferential welding line.

The document GB 839 743 A discloses a method of making an end-to-end joint between pipes of thermoplastic material characterized in that it comprises supplying heat to the end portions of the pipes while confining these end portions between inner and outer sleeves and pressing the pipes axially towards each other to cause said end portions to become joined through a fused fluid-tight union of thermoplastic material which is then caused or permitted to cool and harden.

DE 198 13 599 A1 shows a weld joint which is made between a male tube end and a female tube end provided with a resistance wire and a fusible mass of plastic. The resistance wire heats the plastic mass to its fusion point whereby it forms an internal joint between the two tube ends.

From EP 2 562 409 A1 a duct for a fluid is known with at least two rigid piping components, which are interconnected impermeable to fluid by way of a flexible means of connection. At least one of the piping components has a tubular exterior connecting section. Another one of the at least two piping components has a tubular the interior connecting section. The outer dimensions of the interior connecting section in radial direction are smaller than the inner dimensions of the exterior connecting section.

The US 5 682 924 A discloses a method for manufacturing a tubular body member for use as a clean air duct including the steps of providing a blow mold with at least one embedded knife, forming a tubular body with an apex where the embedded knife is located; removing the tubular body from the blow mold, and cutting the tubular body at the apex so as to form an open end.

It is an object of the invention to provide a duct system with an improved connection of the at least two ducts. In particular, the connection should be more resilient and/or resistant particularly against overpressures.

### Disclosure of Invention

The object is achieved by a duct according to independent claim 1.

According to the invention, at least one reinforcing ring is added. The at least one reinforcing ring can be placed only at one of the ducts or at two ducts. Also separate reinforcing rings can be used for different ducts. So a stiffness at least of the at least one first duct at least nearby the at least one connection area can be increased or reinforced. Particularly, a stiffness of the connection between the at least two ducts can be increased. So, a bending moment, which can act on the at least one connection area, can be decreased. This can be achieved by increasing locally the stiffness of the at least one first duct with help of the at least one reinforcing ring. The bending moment can be effected by a stiffness difference between the at least one first duct, in particular a soft duct, and the corresponding other duct, in particular a rigid duct. The bending moment can be caused by a pressure difference between the inside and the outside of the ducts. With known duct systems the bending moment can increase a tensile stress of the connection between the ducts. As a result, the connection can burst.

The at least one circumferential connection area can have an axial extension, which can be small compared to its radial extension. In this case, the connection area also can be called "connection line". Alternative, the at least one connection area can extend over an area in axial direction. Further, the at least two ducts can be connected along more than one circumferential connection area.

"Radial", "axial", "coaxial" and "circumferential" refer to the longitudinal axis of the duct system, in particular the ducts and/or the at least one reinforcing ring, unless otherwise noted.

Favorably, the stability of the connection between the at least two ducts against a pressure difference between the interior and the exterior of the duct system can be improved with help of the at least one reinforcing ring.

According to the invention, the at least one reinforcing ring is arranged on the outside at least of the at least one first duct. Alternatively or additionally, at least one reinforcing ring can be integrated in the material of at least one duct, in particular of the at least one first duct. The at least one reinforcing ring can be overmolded by the material of the at least one duct.

The at least one reinforcing ring arranged on the outside can limit a blowing up of the at least one first duct and/or the at least one second duct, in particular when an overpressure inside the at least one first duct and/or the at least one second duct exceeds a pressure outside the at least one first duct/second duct.

The at least one reinforcing ring arranged inside at least one first duct can prevent an implosion of the at least one first duct and/or the at least one second duct, in particular when a low-pressure inside the at least one first duct and/or the at least one second duct falls under a pressure outside the at least one first duct/second duct.

With the at least one reinforcing ring, the connection can resist overpressures up to 10 bar and more. The connection can resist continues overpressures and/or pulsating overpressures.

With the at least one reinforcing ring, the connection can resist overpressures at temperatures up to 100°C and more.

Due to the application of the at least one reinforcing ring, a general thickness of the at least one first duct and/or the at least one second duct can be reduced. Accordingly, a weight of the raw material of the at least one first duct and/or the at least one second duct can be reduced. This can reduce the costs and/or a weight of the duct system and the internal combustion engine accordingly.

Favorably, at least one of the at least two ducts can be a component of another part of the duct system. Alternatively or additionally, at least one of the at least two ducts can be connected to another part of the duct system. At least one of the at least two ducts can be a component of a housing or can be connected to a housing, in particular an air filter housing. At least one of the two ducts can be realized as a supply point for a second of the at least two ducts.

Advantageously, the at least one reinforcing ring can be arranged at the at least one first duct during or after a blow molding of the at least one duct.

Particularly, the at least one reinforcing ring can be clipped on or plugged in the at least one first duct.

Advantageously, at least the at least one first duct can have at least one centering element for positioning/holding/centering the at least one reinforcing ring. With the at least one centering element, the at least one reinforcing ring can be positioned/held/centered axial to the longitudinal axis of the at least one first duct.

Particularly, two centering elements can be arranged in an axial distance. The at least one reinforcing ring can be positioned/held/centered between the two centering elements.

At least one centering element can have a wedge profile. The at least one reinforcing ring thereby can be moved easier over the at least one centering ring. Thus, the at least one reinforcing ring can be clipped easier on the at least one duct.

Particularly, the at least one reinforcing ring can be overmolded.

Particularly, the at least one reinforcing ring can comprise metal and/or plastic or can be of metal and/or plastic.

Advantageously, the at least one reinforcing ring can be profiled. Thus, the stability and/or the flexibility of the reinforcing ring can be affected. The profile can comprise at least one circumferential groove and/or at least one circumferential step. Preferably, the at least one groove and/or the at least one step can be circumferential. The at least one crew and/or the at least one step can be continuous circumferential.

Particularly, a surface of the at least one reinforcing ring, which is in radial direction averted to the at least one first duct, can have a profile. Preferably, a radial outer surface of the at least one reinforcing ring can have a profile.

Particularly, at least a part of a surface, which is facing the at least one first duct can have the same topology like the facing surface of the first duct. Preferably, at least a part of a radial inner surface can have the same topology like the adjacent radial outer surface of the section of the at least one first duct and/or the at least one connection area. Favorably, the surface of the at least one reinforcing ring facing the at least one first duct, preferably the radial inner surface of the at least one reinforcing ring, can be plane.

Alternatively or additionally, at least a part of the surface of the at least one reinforcing ring facing the at least one first duct can have a profile. Favorably, the surface of the at least one reinforcing ring facing the at least one first duct can have a profile, in particular at least one circumferential step and/or a circumferential groove.

The ducts are made of plastic. At least one of the ducts, in particular the at least one first duct, can be flexible at least in places. At least one of the ducts, in particular the at least one first duct, can comprise an elastomer or can be of an elastomer. The elastomer can be a thermoplastic. The elastomer can be copolyester or comprise a copolyester. Thus, the duct can be resilient and/or heat resistant and/or chemical resistant. Further, the duct can be strength and/or durable.

Due to the usage of the at least one reinforcing ring, the duct system can be realized without the need of bellows and/or reduced thickness. Thus, the weight of the whole material and/or the costs can be reduced further. Additionally, a cooling cycle time during the production process can be reduced. A cutting of the duct system can be launched earlier in the production process.

Advantageously, the duct system can be used with an intake system for air of an internal combustion engine of a motor vehicle. The internal combustion engine can have a turbocharger. The duct system can be a charging air duct.

The understanding of a duct system incorporates ducts as a single part and also ducts as component of a housing, particular an air charger housing or air cleaner housing.

The invention is not limited to an internal combustion engine of a motor vehicle. The invention can also be applied for other kinds of internal combustion engines, particularly industrial engines. The invention can further be applied in other kinds of fluid systems, in particular for gases or liquids. It can also be used in an exhaust system of an internal combustion engine in particular of a motor vehicle. Alternatively, it can be used in an inside air system, in particular of a motor vehicle. The invention also can be used outside the motor vehicle technology.

According to the invention, the material connection comprises a weld joint.

A material connection can be tight, preferably gas-tight.

A weld joint can easy be used for connecting plastic ducts. In particular, an ultrasonic welding process, a hot plate welding process, an infrared welding process, a gas welding process or a vibration welding process can be applied.
According to the invention, the connection between the at least two ducts is a butt joint connection.

With the butt joint, the at least two ducts can be connected end-to-end. Thus, the connection between the two ducts can be realized without overlapping. The overall wall thickness of the duct system in the area of the connection thus can be reduced.

Alternatively or additionally, the at least two ducts can be connected by a plug-in connection. The end of one of the ducts can be plugged into the end of the other duct. So, the ends of the ducts have an overlap. Favorably, the at least two ducts can be connected by a conical plug-in connection. So, the ducts can be put together easier. A respective connection area can be realized within the overlap.

Advantageously, the radial inner duct can have a stop for the radial outer duct. The end of the radial outer duct can realize a butt joint with the stop of the radial inner duct. The aforementioned connection area can extend over this butt joint. Alternatively, a separate connection area can be realized with the butt joint. It is also possible, that the connection area is only realized by this butt joint.

According to the invention, the at least one first duct is blow-molded. Further, the at least one first duct can be blow-molded and the at least one second duct can be injection-molded.

According to a further favorable embodiment of the invention, at least one of the ducts, in particular the at least one first duct, can be soft at least in the section close to or adjacent to the at least one connection area.

The at least one soft first duct can be connected to an injection-molded duct or to another first duct, in particular to another soft first duct.

In combination with a soft first duct, the efficiency of the reinforcing ring can be increased.

Favorably, a stiffness of the connection, in particular of a welding, between the at least one soft first duct and the at least one other duct, in particular an injection-molded duct or a first duct, can be increased with help of the at least one reinforcing ring.

Favorably, the whole at least one first duct can be soft.

In terms of the invention, "soft" means the hardness/flexibility at least of the section of the at least one first duct in comparison to the hardness/flexibility of the rest of the at least one first duct and/or to the hardness/flexibility of the at least one second duct, in particular a rigid, in particular injected, duct. This applies analogous to the term "rigid".

According to another favorable embodiment of the invention, at least one of the ducts, in particular the at least one first duct, can be rigid at least in the section close to or adjacent to the at least one connection area.

The at least one rigid first duct can be connected to an injection molded duct or to another first duct, in particular to another soft or rigid first duct.

Favorably, the whole at least one duct can be rigid.

According to a further favorable embodiment of the invention, the at least one reinforcing ring can cover the connection area at least partly.

The at least one reinforcing ring so can cover the section of the at least one first duct and the at least one connection area. Thus, the support of the at least one connection area can be further improved.

Alternatively, the at least one reinforcing ring can omit the at least one connection area.

At least a part of the at least one reinforcing ring thereby can lie against a surface of the at least one connection area. Additionally or alternatively, at least a part of the at least one reinforcing ring can be spaced the at least one connection area.

According to another favorable embodiment of the invention, at least one reinforcing ring can cover at least a section of the at least two ducts each.

Thereby, the at least one reinforcing ring can cover at least a section of the at least two ducts each and the at least one connection area.

According to a further favorable embodiment of the invention, at least one first reinforcing ring can cover at least a section of a first duct of the at least two ducts and at least one second reinforcing ring can cover at least a section of a second duct of the at least two ducts.

Thereby, the at least one connection area can be omitted. Alternatively, the at least one connection area can be covered as well by at least one reinforcing ring and/or at least one possible ring connection means.

According to a further favorable embodiment of the invention, the at least one first reinforcing ring and the at least one second reinforcing ring can be connected by at least one ring connection means.

With the at least one ring connection means the at least two reinforcing rings can be fixed to each other.

The at least one ring connection means can cover the at least one connection area of the at least two ducts.

The at least one ring connection means and/or at least one of the reinforcing rings can at least sectionalized lie against the at least one connection area. Alternatively, at least one gap or space can be realized between the at least one connection area and the at least one ring connection means/the at least one reinforcing ring. The at least one gap can be annular. The at least one annular gap can be continuous or noncontinuous in circumferential direction.

According to a further favorable embodiment of the invention, the at least one ring connection means can comprise at least one material connection and/or at least one frictional connection and/or at least one form-fitting connection, in particular a welding connection and/or a soldered connection and/or an adhesive bond and/or a crank-like and/or clamp-like and/or clip-like connection and/or a bolted connection and/or a plug connection and/or a rotary joint and/or a bayonet nut connector.

Favorably, the at least one connection means can be unlockable or removable nonde-structive. Particularly, such connection means can easy be realized by use of a frictional connection and/or a formfitting connection.

Alternatively, the at least one connection means can be nondetachable.

Favorably, the at least one connection means can comprise at least one crank-like and/or clamp-like and/or clip-like connector. Particularly, at least one of the reinforcing rings can have at least one support for the at least one connector. Favorably, the at least one support can be realized by a circumferential groove or a circumferential projection in/on the radial outer or the radial inner surface of the at least one reinforcing ring. The groove or the projection can extend over the whole circumference of the at least one reinforcing ring. Alternatively, the groove or the projection can have circumferential interruptions.

According to a further favorable embodiment of the invention, the at least one reinforcing ring can have at least two shell parts, which can be connected.

Particularly, at least one reinforcing ring can be made up of several shells parts. Two, three or even more shell parts can be used. Favorably, the shell parts can be identical. Thus, the assembly can be simplified. Further, a variety of components can be made easier. In particular, two half shells parts can be used. The shell parts can be placed on the at least one duct with a movement in radial direction. The shell parts of the at least one reinforcing ring can be connected together by use of a clamping system. The clamping system can comprise at least one crank-like and/or clamp-like and/or clip-like connection. At least one part of the clamping system can be realized in one piece with one of the shell parts. Additionally or alternatively, the shell parts can be connected by use of another connection, particularly at least one material connection and/or at least one frictional connection and/or at least one form-fitting connection, in particular a welding connection and/or a soldered connection and/or an adhesive bond and/or a bolted connection and/or a plug connection.

The object is further achieved with the method for manufacturing a duct system by that at least one reinforcing ring being arranged in a blow mold for a duct in an initial circumferential section, which is different to a final circumferential section, where the at least one reinforcing ring finally should be placed, and which has a diameter different to the diameter of the initial circumferential section; the reinforcing ring being overmolded with a blow molding compound using a blow molding process, the duct with the reinforcing ring being separated from the blow mold; after cooling down the duct, the reinforcing ring being moved from the initial circumferential section of the duct in direction axial to the duct to the final circumferential section of the duct.

The above-mentioned advantages and characteristic features of the inventive duct system apply analogously to the inventive method and its favorable embodiments and vice versa.

According to the invention, the at least one reinforcing ring can be placed in the blow mold. The blow mold can have a groove for the at least one reinforcing ring. The at least one reinforcing ring can have the effect of a part of the blow mold, which later on forms the initial circumferential section of the duct. Favorably, the reinforcing ring can surround the duct in the initial circumferential section. Favorably, the radial inner diameter of the at least one reinforcing ring can be smaller than a radial inner diameter of a section of the blow mold for the final circumferential section of the duct. In the final circumferential section, the at least one reinforcing ring finally should be placed. The blow molded further can have a section for a centering element of the duct. The section for the centering element can be placed between the section of the blow mold for the final circumferential section and the at least one reinforcing ring.

After that, the plastic material for the duct can be inserted into the blow mold and formed by the blow molding process. The at least one reinforcing ring is overmolded during the blow molding process. The blow mold can be removed from the duct. The duct can cool down. Due to the cooling down, the duct can shrink. The diameter of the initial circumferential section and the final circumferential section of the duct can decrease. Between the radial inner circumferential side of the at least one reinforcing ring and the radial outer circumferential side of the initial circumferential section a gap can arise. Whereas the radial outer diameter of the final circumferential section of the duct can correspond to the radial inner diameter of the at least one reinforcing ring. The reinforcing ring can be moved from the initial circumferential section in direction axial to the duct to the final circumferential section of the duct. The at least one reinforcing ring can be moved over the centering element, provided existing.

### Brief Description of Drawings

The present invention together with the above-mentioned and other objects and advantages may best be understood from the following detailed description of the embodiments, but not restricted to the embodiments, wherein is shown schematically
- figure 1: an isometric view of a charging air duct system of an internal combustion engine of a motor vehicle according to a first embodiment, wherein two ducts are welded together and a reinforcing ring is placed on a first of the ducts;
- figure 2: a side view of the duct system of figure 1;
- figure 3: a longitudinal section of the duct system of figure 2 along the line of intersection III-III;
- figures 4 to 6: steps of a method for manufacturing the duct system of figures 1 to 3, wherein the reinforcing ring is placed on the first duct;
- figure 7: an isometric view of a charging air duct system according to a second embodiment, wherein the ends of the ducts and a part of the reinforcing ring are conical;
- figure 8: a side view of the duct system of figure 7;
- figure 9: a longitudinal section of the duct system of figure 8 along the line of intersection IX-IX;
- figure 10: an isometric view of a charging air duct system according to a third embodiment, wherein two reinforcing rings are placed on one of the ducts each and the two reinforcing rings are not connected to each other;
- figure 11: a side view of the duct system of figure 10
- figure 12: a longitudinal section of the duct system of figure 11 along the line of intersection XII-XII;
- figure 13: an isometric view of a charging air duct system according to a fourth embodiment, wherein two reinforcing rings are placed on one of the ducts each and welded together;
- figure 14: a side view of the duct system of figure 13;
- figure 15: a longitudinal section of the duct system of figure 14 along the line of intersection XV-XV;
- figure 16: an isometric view of a charging air duct system according to a fifth embodiment, wherein two reinforcing rings are placed on one of the ducts each, welded together and wherein the duct parts have centering elements for retaining the reinforcing rings;
- figure 17: a longitudinal section of the duct system of figure 14 along the line of intersection XVII-XVII;
- figure 18: an isometric view of a charging air duct system according to a sixth embodiment, wherein two half shells parts of a reinforcing ring are placed on both ducts and connected together by use of a clamping system;
- figure 19: a side view of the duct system of figure 18;
- figure 20: a cross-section of the duct system of figure 18 and 19 through the reinforcing ring along a line of intersection XX-XX of figure 21;
- figure 21: a longitudinal section of the duct system of figure 19 along the line of intersection XXI-XXI;
- figure 22: an isometric view of a charging air duct system according to a seventh embodiment, wherein one reinforcing ring is placed on one of the ducts;
- figure 23: a side view of the duct system of figure 22;
- figure 24: a longitudinal section of the duct system of figure 22;
- figure 25: a longitudinal section of the duct system of figure 23 along the line of intersection XXV-XXV;
- figure 26: an isometric view of a charging air duct system according to an eighth embodiment, wherein a reinforcing ring is placed on the first duct and the first duct and the reinforcing ring are welded to the second duct;
- figure 27: a side view of the duct system of figure 26;
- figure 28: a longitudinal section of the duct system of figure 27 along the line of intersection XXIIX-XXIIX.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

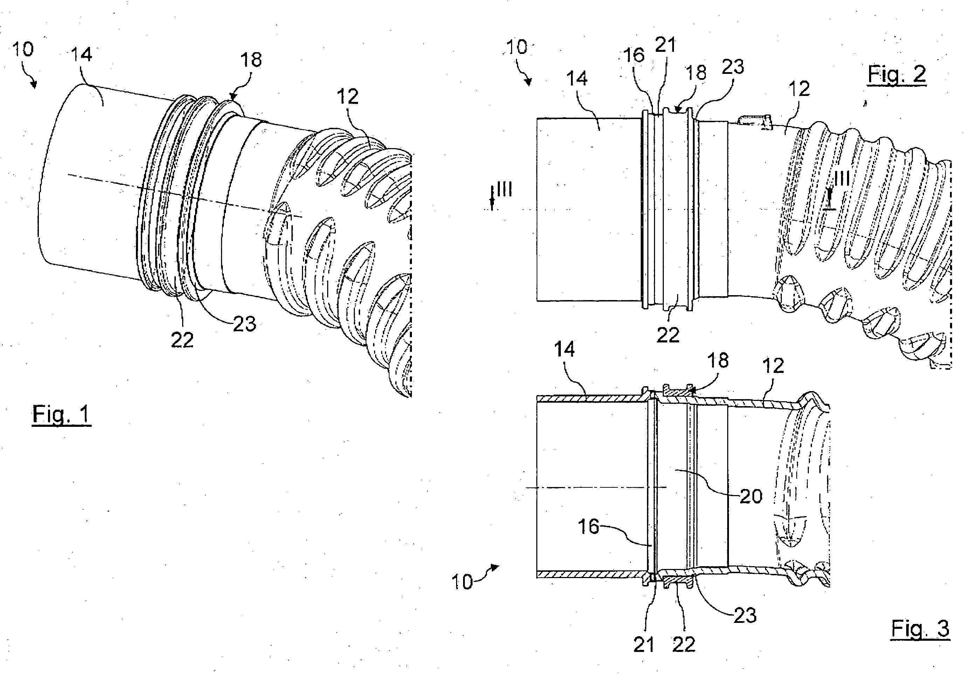

Figures 1 to 3 depict a charging air duct system 10 of an air intake system of an internal combustion engine of a motor vehicle according to a first embodiment. The internal combustion engine has a not shown turbocharger. The air duct system 10 is mounted upstream on a housing of an air filter.

The air duct system 10 comprises a first duct 12, in figures 1 to 3 on the right, and a second duct 14 on the left.

The first duct 12 is made of plastic. In the described embodiment, the material is a thermoplastic. The first duct 12 is blow-molded. It is soft and flexible. It also can be rigid.

The second duct 14 is also made of plastic. It is injection-molded. The second duct 14 is rigid in comparison to the first duct 12.

The first duct 12 and the second duct 14 are connected at one end each and along a circumferential connection line 16 each by means of a material connection. The material connection is realized by a weld joint. The connection between the first duct 12 and the second duct 14 is a butt joint. The connected ends of the first duct 12 and the second duct 14 have no overlapping.

"Radial", "axial", "coaxial" and "circumferential" refer to the longitudinal axis of the duct system 10, in particular the ducts 12 and/or 14, unless otherwise noted.

A reinforcing ring 18 is mounted to the first duct 12. The reinforcing ring 18 is coaxial to the first duct 12. The reinforcing ring 18 is close to the connection line 16. It is covering a circumferential section 20 of the first duct 12. The reinforcing ring 18 omits the connection line 16.

The reinforcing ring 18 is positioned axial between a first centering element 21 and a second centering element 23. The centering elements 21 and 23 are annular projections on the radial outer surface of the first duct 12 each. The first centering element 21 is arranged between the reinforcing ring 18 and the connection line 16. It is adjacent to the connection line 16. The second centering element 23 is on the opposite side of the reinforcing ring 18. The radial outer surface of the second centering element 23 has on the far side of the reinforcing ring 18 a wedge profile.

The reinforcing ring 18 is made of plastic or metal or a combination of plastic and metal. It is profiled. Its radial outer surface contains a circumferential groove 22. A radial inner surface of the reinforcing ring 18 has the same topology like the radial outer surface of the covered section 20 of the first duct 12. The radial inner surface of the reinforcing ring 18 is plane. It lies against the radial outer surface of the covered section 20 of the first duct 12.

A stiffness of the weld joint between the first duct 12 and the second duct 14 is increased with help of the reinforcing ring 18. With the reinforcing ring 18, the stability of the weld joint for example against overpressure in the duct system 10 is improved.

For manufacturing the duct system 10, the second duct 14 is injection molded. The first duct 12 is blow-molded.

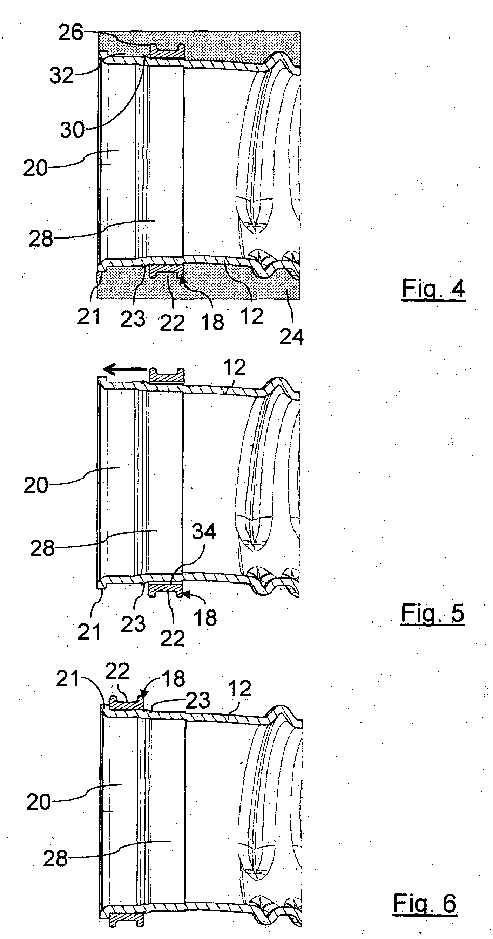

Process steps of the method for manufacturing the first duct 12 are shown in figures 4 to 6. Firstly, the reinforcing ring 18 being placed in the in a blow mold 24 as shown in figure 4. The blow mold 24 has a groove 26 for the reinforcing ring 18. The reinforcing ring 18 has the effect of a part of the blow mold 24, which later on forms an initial circumferential section 28 of the first duct 12. The reinforcing ring 18 then surrounds the first duct 12 in the initial circumferential section 28. A radial inner diameter of the reinforcing ring 18 is smaller than a radial inner diameter of a section of the blow mold 24 for the circumferential section 20 of the first duct 12.

The blow mold 24 further has a section 30 for the second centering element 23 of the first duct 12. The section 30 for the second centering element 23 is placed between a section 32 of the blow mold 24 for the circumferential section 20 and the groove 26 for the reinforcing ring 18. Besides, the blow mold 24 has a section for the first centering element 21 of the first duct 12.

The plastic material for the first duct 12 is being inserted into the blow mold 24 and being formed by the blow molding process. The reinforcing ring 18 is overmolded during the blow molding process. The blow mold 24 is then being removed from the first duct 12. The first duct 12 is cooling down. Due to cooling, the first duct 12 shrinks. The radial outer diameters of the initial circumferential section 28 and the circumferential section 20 decrease. Between the radial inner circumferential side of the reinforcing ring 18 and the radial outer circumferential side of the initial circumferential section 28 a gap 34 arises, as shown in figure 5. Whereas the radial outer diameter of the circumferential section 20 corresponds to the radial inner diameter of the reinforcing ring 18. The reinforcing ring 18 is then being moved from the initial circumferential section 28 in direction axial to the first duct 12 to the circumferential section 20. In figure 5, this is indicated by an arrow. Thereby, the reinforcing ring 18 being moved over the second centering element 23.

With a not shown method for manufacturing the duct system 10, instead of being overmolded the reinforcing ring 18 can be clipped on the first duct 12 from the side of the second centering element 23.

Finally, the first duct 12 and the second duct 14 being welded together along the connection line 16.

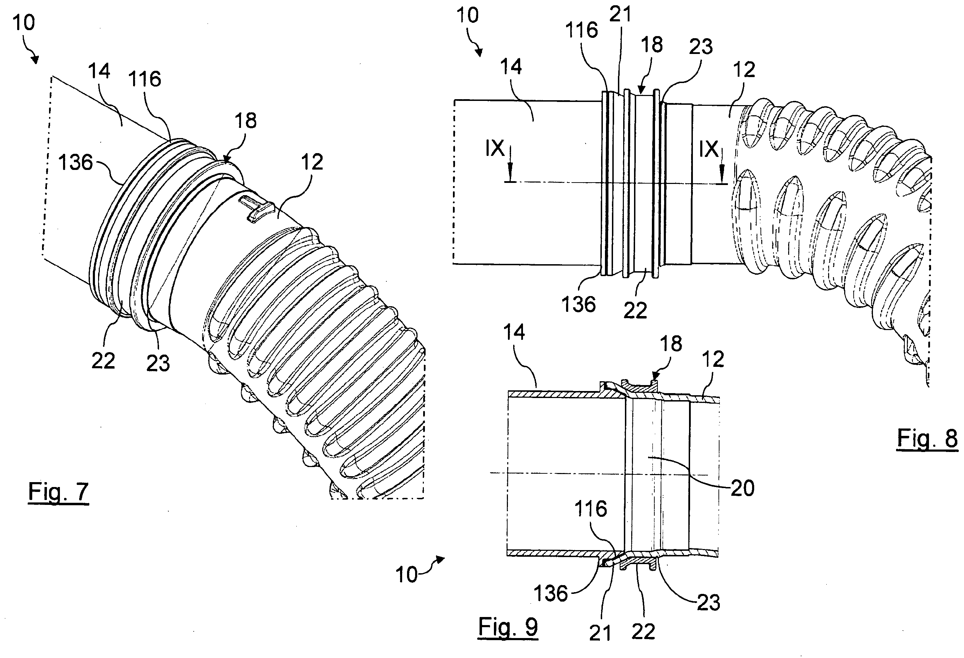

Figures 7 to 9 depict a second embodiment of a charging air duct system 10. Those parts which are equal to those of the first embodiment according to figures 1 to 6 have the same reference numbers. Different to the first embodiment, in the second embodiment the end of the second duct 14 is plugged into the end of the first duct 12.

On its radial outer side the second duct 14 tapers toward its end. A stop 136 in the form of a circumferential protrusion is beneath the tapered section on the radial outer surface of the second duct 14.

On its radial inner side the first duct 12 expands toward its end. The radial outer side of the first duct 12 in the expanded area also is conical and acts as a first centering element 21.

The radial inner side of the reinforcing ring 18 is partly complementary to the radial outer side of the first duct 12 in the expanded area.

The first duct 12 is connected to the stop 136 by butt joint and the tapered section of the second duct 14 along a conical circumferential connection area 116 by means of a material connection.

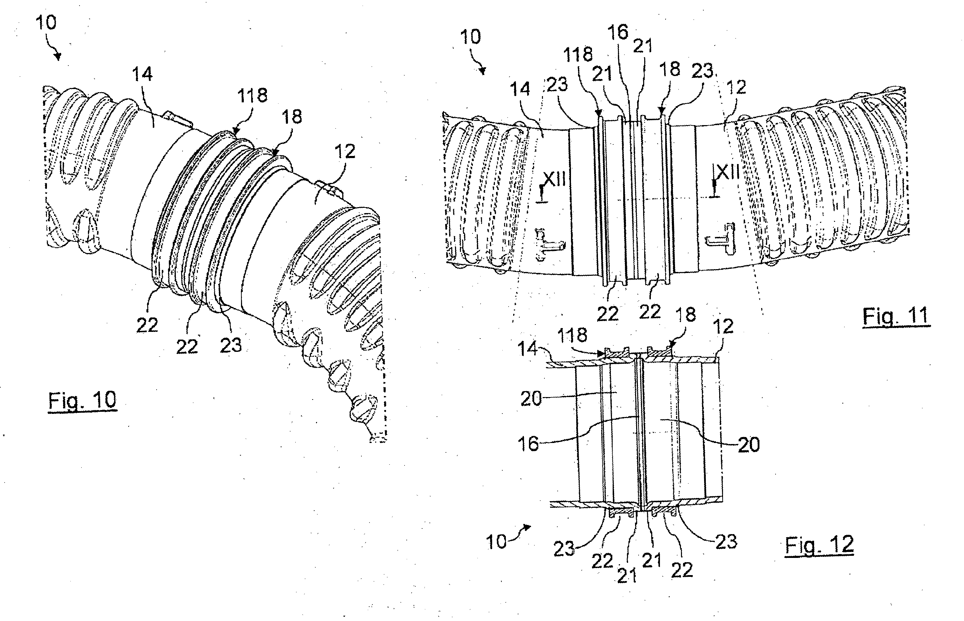

Figures 10 to 12 depict a third embodiment of a charging air duct system 10. Those parts which are equal to those of the first embodiment according to figures 1 to 6 have the same reference numbers. Different to the first embodiment, in the third embodiment the second duct 14 is blow-molded of a thermoplastic. It is soft and flexible. Preferably, the second duct 14 is made of the same material like the first duct 12.

Additionally, a second reinforcing ring 118 is mounted to the second duct 14 close to the connection line 16 in a similar manner like the first reinforcing ring 18 is mounted to the first duct 12. The second reinforcing ring 118 is similar to the first reinforcing ring 18. The second reinforcing ring 118 is covering a section 20 of the second duct 14. It omits the connection line 16.

The first reinforcing ring 18 and the second reinforcing ring 118 are separate. The connection line 16 is arranged in an axial gap between the first reinforcing ring 18 and the second reinforcing ring 118.

For the manufacture of the duct system 10, at first, the first duct 12 and the second duct 14 are blow-molded separately. Analogous to the first embodiment, the first reinforcing ring 18 thereby is placed on the first duct 12 and the second reinforcing ring 118 is placed on the second duct 14. After that, the first duct 12 and the second duct 14 are welded together.

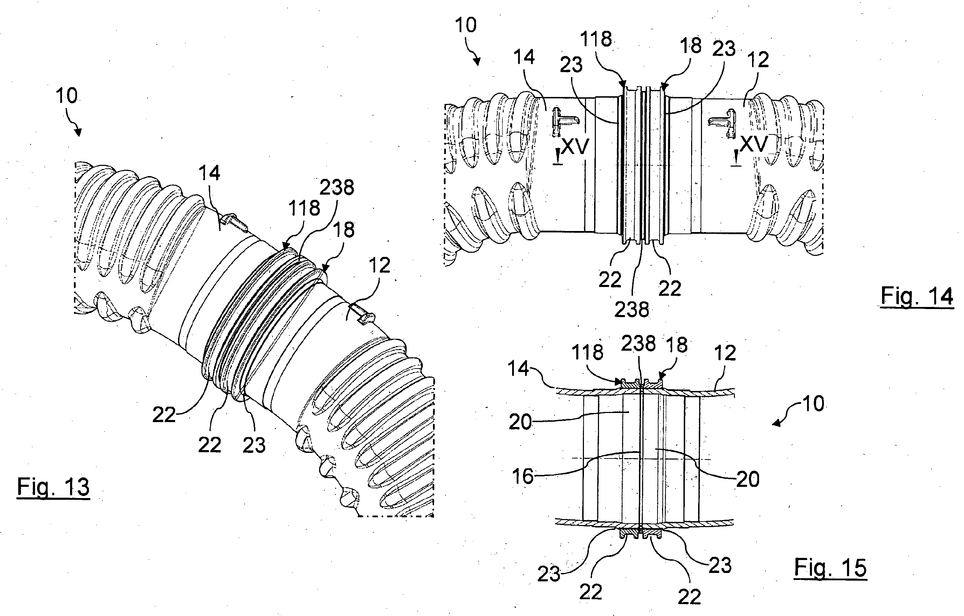

Figures 13 to 15 depict a fourth embodiment of a charging air duct system 10. Those parts which are equal to those of the third embodiment according to figures 10 to 12 have the same reference numbers. Different to the third embodiment, in the fourth embodiment the first duct 12 and the second duct 14 have no first centering element adjacent to the connection line 16. Instead of that, the reinforcing rings 18 and 118 are adjacent to the connection line 16.

The first reinforcing ring 18 and the second reinforcing ring 118 are connected at one end each by a ring connection means 238. The ring connection means 238 is a welded joint. With the ring connection means 238, the first reinforcing ring 18 and the second reinforcing ring 118 are connected continuous in circumferential direction.

The ring connection means 238 covers the connection line 16 of the first duct 12 and the second duct 14 continuous in circumferential direction. The ring connection means 238 lies against the radial outer surface of the connection line 16.

For the manufacture of the duct system 10, firstly, the first duct 12 and the second duct 14 are blow-molded separately. Analogous to the first, the second and third embodiment, the first reinforcing ring 18 is placed on the first duct 12 and the second reinforcing ring 118 is placed on the second duct 14. After that, the first duct 12 and the second duct 14 are welded together and the first reinforcing ring 18 and the second reinforcing ring 118 are welded together.

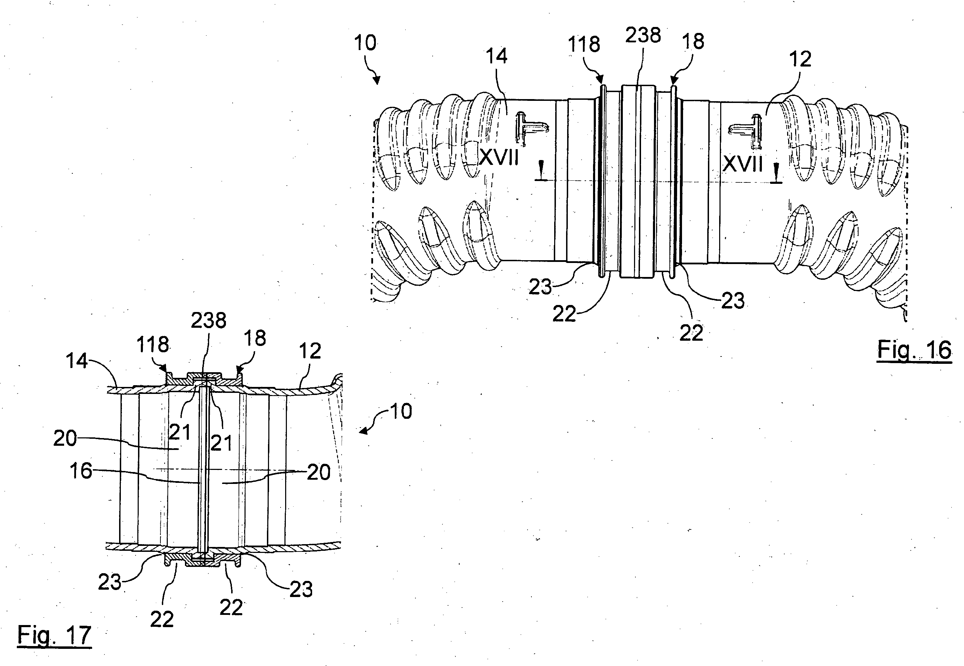

Figures 16 and 17 depict a fifth embodiment of a charging air duct system 10. Those parts which are equal to those of the third embodiment according to figures 10 to 12 have the same reference numbers. Different to the third embodiment, in the fifth embodiment the reinforcing rings 18 and 118 overlap the first centering elements 21 each.

The first reinforcing ring 18 and the second reinforcing ring 118 are connected at one end each by a ring connection means 238 similar to the fourth embodiment of figures 13 to 15. The ring connection means 238 is a welded joint. With the ring connection means 238, the first reinforcing ring 18 and the second reinforcing ring 118 are connected continuous in circumferential direction.

The ring connection means 238 covers the connection line 16 of the first duct 12 and the second duct 14 continuous in circumferential direction.

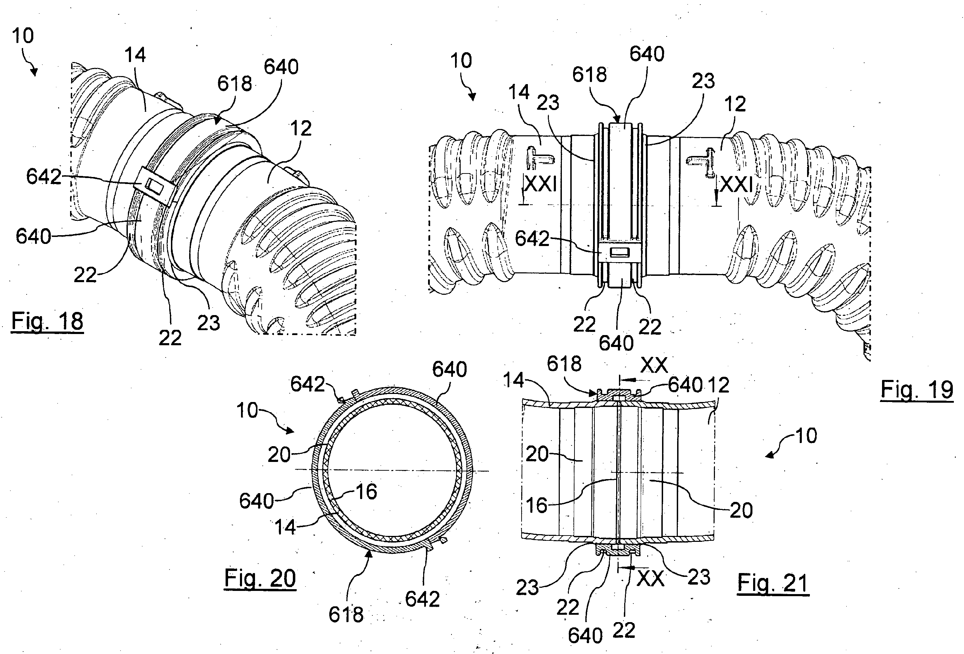

Figures 18 to 21 depict a sixth embodiment of a charging air duct system 10. Those parts which are equal to those of the third embodiment according to figures 10 to 12 have the same reference numbers. Different to the third embodiment, in the fifth embodiment instead of the reinforcing rings 18 and 118, one reinforcing ring 618 comprises two half shells 640. The shape of the reinforcing ring 618 is quite similar to the connected reinforcing rings 18 and 118 of the third embodiment. The reinforcing ring 618 covers the connection line 16. The half shells 640 are connected by two clamp systems 642.

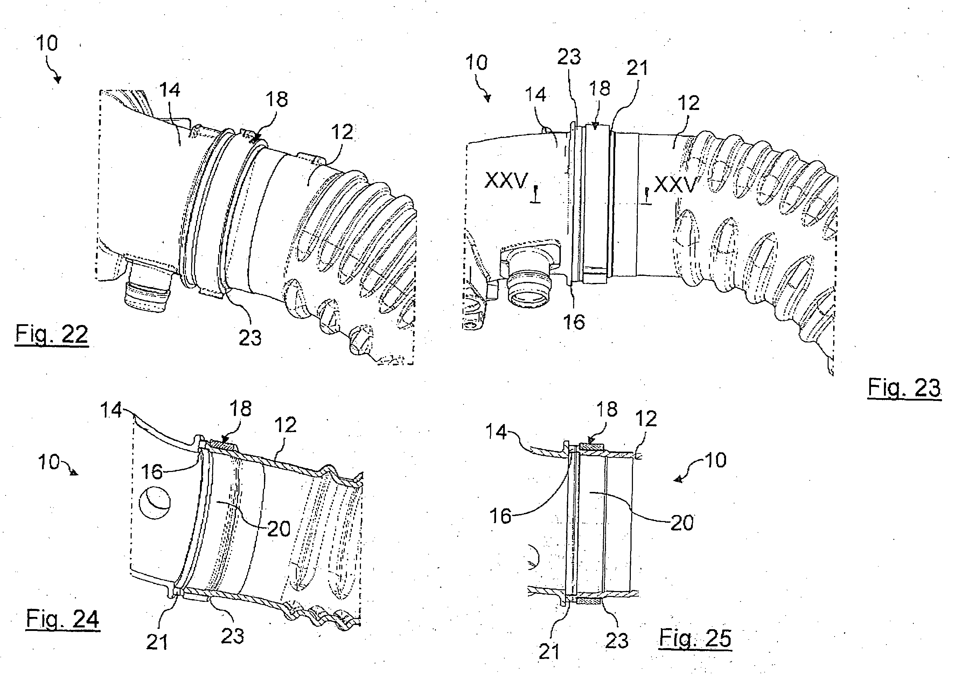

Figures 22 to 25 depict a seventh embodiment of a charging air duct system 10. Those parts which are equal to those of the first embodiment according to figures 1 to 6 have the same reference numbers. Different to the first embodiment, in the fifth embodiment the reinforcing ring 18 has no groove in its radial outer surface. The reinforcing ring 18 also can have any other shape, which can be helpful during the handling.

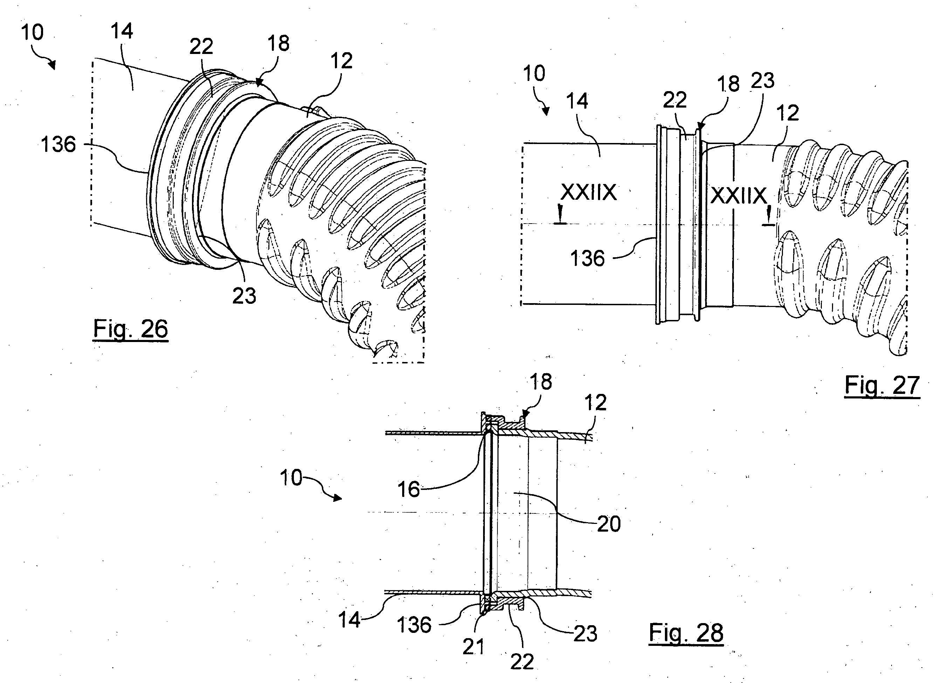

Figures 26 to 28 depict an eighth embodiment of a charging air duct system 10. Those parts which are equal to those of the first embodiment according to figures 1 to 6 have the same reference numbers. Different to the first embodiment, in the eighth embodiment the first duct 12 and the reinforcing ring 18 each are welded to a stop 136 of the second duct 14.

## Claims

1. Duct system (10), in particular of an intake system, in particular of an internal combustion engine, in particular of a motor vehicle, comprising at least two ducts (12, 14) of plastic, which are connected at one end each and along at least one circumferential connection area (16) each by means of at least one material connection, wherein at least one reinforcing ring (18; 118; 618) is mounted at least at the at least one first duct (12) covering at least a section (20) of the at least one first duct (12) close to or adjacent to the at least one connection area (16), wherein the at least one reinforcing ring (18; 118; 618) is arranged on the outside at least of the at least one first duct (12), wherein the material connection comprises a weld joint, wherein the connection between the at least two ducts (12, 14) is a butt joint. **characterized in that** the first duct is blow-molded (12).

2. Duct system according to claim 1, **characterized in that** at least one of the ducts (14) is injection-molded.

3. Duct system according to one of the previous claims, **characterized in that** at least one of the ducts (12, 14) is soft at least in the section (20) close to or adjacent to the connection area (16).

4. Duct system according to claim 1 or 2, **characterized in that** at least one of the ducts (12, 14) is rigid at least in the section (20) close to or adjacent to the connection area (16).

5. Duct system according to one of the previous claims, **characterized in that** the at least one reinforcing ring (18; 618) covers the connection area (16) at least partly.

6. Duct system according to one of the previous claims, **characterized in that** at least one reinforcing ring (18; 118; 618) covers at least a section (20) of the at least two ducts (12, 14) each.

7. Duct system according to one of the previous claims, **characterized in that** at least one first reinforcing ring (18) covers at least a section (20) of a first duct (12) of the at least two ducts (12, 14) and at least one second reinforcing ring (118) covers at least a section (20) of a second duct (14) of the at least two ducts (12, 14).

8. Duct system according to claim 7, **characterized in that** the at least one first reinforcing ring (18) and the at least one second reinforcing ring (118) are connected by at least one ring connection means (238).

9. Duct system according to claim 8, **characterized in that** the at least one ring connection means (238) comprises at least one material connection and/or at least one frictional connection and/or at least one form-fitting connection, in particular a welding connection (238) and/or a soldered connection and/or an adhesive bond and/or a crank-like and/or clamp-like and/or clip-like connection and/or a bolted connection and/or a plug connection and/or a rotary joint and/or a bayonet nut connector.

10. Duct system according to one of the previous claims, **characterized in that,** the at least one reinforcing ring (618) has at least two shell parts (640), which are connected.

11. Method for manufacturing a duct system (10), in particular according to one of the previous claims, **characterized in that,** at least one reinforcing ring (18) being arranged in a blow mold (24) for a duct (12) in an initial circumferential section (28), which is different to a final circumferential section (20), where the at least one reinforcing ring (12) finally should be placed, and which has a diameter different to the diameter of the initial circumferential section (28); the reinforcing ring (18) being overmold with a blow molding compound using a blow molding process; the duct (12) with the reinforcing ring (18) being separated from the blow mold (24); after cooling down the duct (12), the reinforcing ring (18) being moved from the initial circumferential section (28) of the duct (12) in direction axial to the duct (12) to the final circumferential section (20) of the duct (12).

## Patentansprüche

1. Leitungssystem (10), insbesondere eines Ansaugsystems, insbesondere eines Verbrennungsmotors, insbesondere eines Kraftfahrzeugs, umfassend mindestens zwei Leitungen (12, 14) aus Kunststoff, welche jeweils einenends und entlang mindestens jeweils einem umfangsmäßig verlaufenden Anschlussbereich (16) mittels mindestens eines Materialanschlusses verbunden sind, wobei mindestens ein Verstärkungsring (18; 118; 618) an mindestens der mindestens einen ersten Leitung (12) montiert ist, welche mindestens einen Abschnitt (20) der mindestens einen ersten Leitung (12) nahe dem oder angrenzend an dem mindestens einen Anschlussbereich (16) abdeckt, wobei der mindestens eine Verstärkungsring (18; 118; 618) an der Außenseite mindestens der mindestens einen ersten Leitung (12) angeordnet ist, wobei der Materialanschluss einen Schweißstoß umfasst, wobei die Verbindung zwischen den mindestens zwei Leitungen (12, 14) ein Stumpfstoß ist, **dadurch gekennzeichnet, dass** die erste Leitung (12) blasgeformt ist.

2. Leitungssystem nach Anspruch 1, **dadurch gekennzeichnet, dass** mindestens eine der Leitungen (14) spritzgegossen ist.

3. Leitungssystem nach einem der vorherigen Ansprüche, **dadurch gekennzeichnet, dass** mindestens eine der Leitungen (12, 14) mindestens in dem dem Anschlussbereich (16) nahen oder angrenzenden Abschnitt (20) weich ist.

4. Leitungssystem nach Anspruch 1 oder 2, **dadurch gekennzeichnet, dass** mindestens eine der Leitungen (12, 14) mindestens in dem dem Anschlussbereich (16) nahen oder angrenzenden Abschnitt (20) steif ist.

5. Leitungssystem nach einem der vorherigen Ansprüche, **dadurch gekennzeichnet, dass** der mindestens eine Verstärkungsring (18; 618) den Anschlussbereich (16) mindestens teilweise abdeckt.

6. Leitungssystem nach einem der vorherigen Ansprüche, **dadurch gekennzeichnet, dass** mindestens ein Verstärkungsring (18; 118; 618) mindestens einen Abschnitt (20) der mindestens zwei Leitungen (12, 14) jeweils abdeckt.

7. Leitungssystem nach einem der vorherigen Ansprüche, **dadurch gekennzeichnet, dass** mindestens ein erster Verstärkungsring (18) mindestens einen Abschnitt (20) einer ersten Leitung (12) der mindestens zwei Leitungen (12, 14) abdeckt und dass mindestens ein zweiter Verstärkungsring (118) mindestens einen Abschnitt (20) einer zweiten Leitung (14) der mindestens zwei Leitungen (12, 14) abdeckt.

8. Leitungssystem nach Anspruch 7, **dadurch gekennzeichnet, dass** mindestens der eine erste Verstärkungsring (18) und der mindestens eine zweite Verstärkungsring (118) durch mindestens ein Ringanschlussmittel (238) verbunden sind.

9. Leitungssystem nach Anspruch 8, **dadurch gekennzeichnet, dass** das mindestens eine Ringanschlussmittel (238) mindestens einen Materialanschluss und/oder mindestens eine reibschlüssige Verbindung und/oder mindestens eine formschlüssige Verbindung, insbesondere eine Schweißverbindung (238) und/oder eine Lötverbindung und/oder eine Adhäsionsklebung und/oder eine kurbelartige und/oder eine klemmenartige und/oder clipartige Verbindung und/oder eine Schraubenverbindung und/oder eine Steckerverbindung und/ oder eine Drehdurchführung und/oder einen BNC-Steckverbinder umfasst.

10. Leitungssystem nach einem der vorherigen Ansprüche, **dadurch gekennzeichnet, dass** der mindestens eine Verstärkungsring (618) mindestens zwei Schalenteile (640) hat, die verbunden sind.

11. Verfahren zur Herstellung eines Leitungssystems (10), insbesondere nach einem der vorherigen Ansprüche, **dadurch gekennzeichnet, dass** mindestens ein Verstärkungsring (18) in einem Blaswerkzeug (24) für eine Leitung (12) in einem ersten Umfangsabschnitt (28) angeordnet ist, welcher anders als ein letzter Umfangsabschnitt (20) ist, wo der mindestens eine Verstärkungsring (12) letztendlich platziert werden sollte, und welcher einen anderen Durchmesser als den Durchmesser des ersten Umfangsabschnittes (28) hat; der Verstärkungsring (18) wird unter Anwendung eines Blasverfahrens mit einer blasgeformten Verbindung umspritzt; die Leitung (12) mit dem Verstärkungsring (18) wird von dem Blaswerkzeug (24) getrennt; nach der Abkühlung der Leitung (12) wird der Verstärkungsring (18) von dem ersten Umfangsabschnitt (28) der Leitung (12) in Richtung axial zu der Leitung (12) zu dem letzten Umfangsabschnitt (20) der Leitung (12) bewegt.

## Revendications

1. Système de conduits (10), en particulier d'un système d'admission, en particulier d'un moteur à combustion interne, en particulier d'un véhicule à moteur, comprenant au moins deux conduits (12, 14) en plastique, qui sont reliés chacun à une extrémité et le long d'au moins une zone de raccordement circonférentielle (16), chacun au moyen d'au moins un raccordement de matériau, au moins un anneau de renfort (18 ; 118 ; 618) étant monté au moins au niveau dudit au moins un premier conduit (12) couvrant au moins une section (20) dudit au moins un premier conduit (12) proche ou adjacente par rapport à ladite au moins une zone de raccordement (16), ledit au moins un anneau de renfort (18 ; 118 ; 618) étant disposé à l'extérieur au moins dudit au moins un premier conduit (12), le raccordement de matériau comprenant un joint soudé, le raccordement entre lesdits au moins deux conduits (12, 14) étant un joint bout à bout, **caractérisé en ce que** le premier conduit est moulé par soufflage (12).

2. Système de conduits selon la revendication 1, **caractérisé en ce qu'**au moins un des conduits (14) est moulé par injection.

3. Système de conduits selon l'une des revendications précédentes, **caractérisé en ce qu'**au moins un des conduits (12, 14) est mou au moins dans la section (20) proche ou adjacente par rapport à la zone de raccordement (16).

4. Système de conduits selon la revendication 1 ou 2, **caractérisé en ce qu'**au moins un des conduits (12, 14) est rigide au moins dans la section (20) proche ou adjacente par rapport à la zone de raccordement (16).

5. Système de conduits selon l'une des revendications précédentes, **caractérisé en ce que** ledit au moins un anneau de renfort (18 ; 618) couvre la zone de raccordement (16) au moins partiellement.

6. Système de conduits selon l'une des revendications précédentes, **caractérisé en ce qu'**au moins un anneau de renfort (18 ; 118 ; 618) couvre chacune au moins une section (20) desdits au moins deux conduits (12, 14).

7. Système de conduits selon l'une des revendications précédentes, **caractérisé en ce qu'**au moins un premier anneau de renfort (18) couvre au moins une section (20) d'un premier conduit (12) desdits au moins deux conduits (12, 14) et qu'au moins un deuxième anneau de renfort (118) couvre au moins une section (20) d'un deuxième conduit (14) desdits au moins deux conduits (12, 14).

8. Système de conduits selon la revendication 7, **caractérisé en ce que** ledit au moins un premier anneau de renfort (18) et ledit au moins un deuxième anneau de renfort (118) sont raccordés par au moins un moyen de raccordement d'anneau (238).

9. Système de conduits selon la revendication 8, **caractérisé en ce que** ledit au moins un moyen de raccordement d'anneau (238) comprend au moins un raccordement de matériau et/ou au moins un raccordement par frottement et/ou au moins un raccordement par complémentarité de forme, en particulier un raccordement par soudage (238) et/ou un raccordement soudé et/ou une liaison adhésive et/ou un raccordement de type manivelle et/ou de type bride de serrage et/ou de type attache et/ou un raccordement boulonné et/ou un raccordement enfichable et/ou un joint tournant et/ou un connecteur BNC.

10. Système de conduits selon l'une des revendications précédentes, **caractérisé en ce que** ledit au moins un anneau de renfort (618) a au moins deux parties de coque (640), qui sont raccordées.

11. Procédé de fabrication d'un système de conduits (10), en particulier selon l'une des revendications précédentes, **caractérisé en ce qu'**au moins un anneau de renfort (18) est disposé dans un moule de soufflage (24) pour un conduit (12) dans une section circonférentielle initiale (28), laquelle est différente d'une section circonférentielle finale (20), où ledit au moins un anneau de renfort (12) doit finalement être placé et qui a un diamètre différent du diamètre de la section circonférentielle initiale (28) ; l'anneau de renfort (18) est surmoulé avec un composé de moulage par soufflage à l'aide d'un processus de moulage par soufflage ; le conduit (12) avec l'anneau de renfort (18) est séparé du moule de soufflage (24) ; après refroidissement du conduit (12), l'anneau de renfort (18) est déplacé de la section circonférentielle initiale (28) du conduit (12) dans une direction axiale au conduit (12) vers la section circonférentielle finale (20) du conduit (12).
